# FASCICULE DE BREVET EUROPEEN

(11) **EP 4 355 986 B1**
(45) Date de publication et mention de la délivrance du brevet: **09.04.2025**
(21) Numéro de dépôt: 22732256.7
(22) Date de dépôt: 10.06.2022
(51) Int. Cl.: F02C 3/22, F02C 7/22, F02C 9/40

(54) **SYSTÈME ET PROCÉDÉ DE CONDITIONNEMENT DE CARBURANT CONFIGURÉ POUR ALIMENTER UN TURBOMOTEUR D'AÉRONEF À PARTIR DE CARBURANT ISSU D'UN RÉSERVOIR CRYOGÉNIQUE**
BRENNSTOFFKONDITIONIERUNGSSYSTEM UND VERFAHREN ZUR VERSORGUNG EINES FLUGZEUGTURBINENMOTORS MIT BRENNSTOFF AUS EINEM KRYOTANK
FUEL CONDITIONING SYSTEM AND METHOD CONFIGURED TO SUPPLY AN AIRCRAFT TURBINE ENGINE WITH FUEL FROM A CRYOGENIC TANK

(30) Priorité: 14.06.2021 FR 2106216
(43) Date de publication de la demande: 24.04.2024
(73) Titulaire: SAFRAN, 75015 Paris (FR)
(72) Inventeur: MAALOUF, Samer, 77550 MOISSY-CRAMAYEL (FR); JOUAN, Hugo, Pierre, Mohamed, 77550 MOISSY-CRAMAYEL (FR); SIBILLI, Thierry, 77550 MOISSY-CRAMAYEL (FR); LAMBERT, Pierre-Alain, Marie, Cyrille, 77550 MOISSY-CRAMAYEL (FR); NOBA, Ibrahima, 77550 MOISSY-CRAMAYEL (FR)
(74) Mandataire: Argyma
(86) Numéro de dépôt international: PCT/EP2022/065799
(87) Numéro de publication internationale: WO 2022/263307

(56) Documents cités:
- WO-A1-2014/105335
- WO-A1-2019/102156
- DE-A1- 102018 221 323
- US-A1- 2020 088 098

## Description

### Domaine technique

La présente invention concerne le domaine des aéronefs comportant des turbomoteurs alimentés par du carburant stocké dans un réservoir cryogénique.

Il est connu de stocker du carburant, en particulier de l'hydrogène, sous forme liquide pour limiter l'encombrement et la masse des réservoirs de l'aéronef. A titre d'exemple, le carburant est stocké à une température de l'ordre de 20 à 22 Kelvins (-253 à -251°C) dans un réservoir cryogénique de l'aéronef.

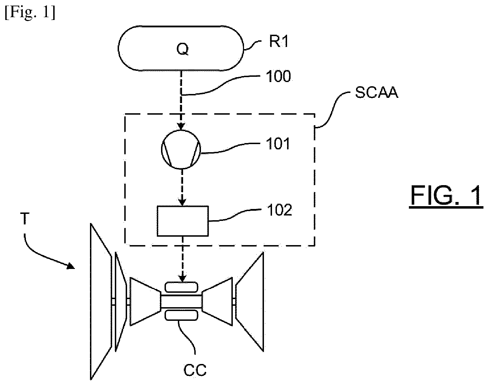

Afin de pouvoir être injecté dans la chambre de combustion d'un turbomoteur, le carburant doit être conditionné, c'est-à-dire pressurisé et chauffé, afin de permettre une combustion optimale. Un conditionnement est par exemple nécessaire pour réduire le risque de givrage de la vapeur d'eau contenue dans l'air qui circule dans le turbomoteur, en particulier, au niveau des injecteurs de carburant du turbomoteur. En référence à la [Fig.1], il est représenté un système de conditionnement SCAA selon l'art antérieur comprenant un circuit de carburant 100 relié en entrée à un réservoir cryogénique R1 et en sortie à la chambre de combustion CC d'un turbomoteur T. Un flux de carburant Q circulant d'amont en aval dans le circuit de carburant 100 et traverse successivement une pompe mécanique 101 et un module de chauffage 102.

En pratique, pour réaliser le pompage, une pompe mécanique 101 de type volumétrique ou centrifuge peut être utilisée, appelée aussi pompe haute pression, qui fonctionne à des pressions de 50 bars. Une telle pompe mécanique 101 présente de nombreux inconvénients sur le plan de l'étanchéité, de la lubrification et du rendement. Une pompe mécanique 101 requiert notamment une énergie importante pour pouvoir assurer la compression. A ce jour, les pompes mécaniques 101 pouvant être utilisées avec des réservoirs cryogéniques ne permettent pas de fonctionner sur une large gamme de débit/pression pour un rendement élevé. Aussi, en pratique, il est nécessaire d'utiliser une pompe mécanique 101 dont le point de fonctionnement n'est pas optimal et qui requiert de s'éloigner de la plage d'utilisation conseillée de ladite pompe mécanique 101, ce qui augmente les contraintes appliquées à la pompe mécanique 101 et réduit son rendement. Une telle pompe mécanique 101 ne peut ainsi pas adapter son débit de manière optimale en fonction des besoins du turbomoteur. Le document WO2014105335A1 divulgue un système de conditionnement de carburant configuré pour alimenter un turbomoteur d'aéronef conforme à l'état de la technique.

L'invention vise ainsi à éliminer au moins certains de ces inconvénients en proposant un nouveau système de conditionnement de carburant permettant une compression et un chauffage avec un meilleur rendement et une plus grande fiabilité.

De manière incidente, on connaît dans l'art antérieur un système de mise en pression de carburant dans des réservoirs élémentaires qui sont chacun montés en pression par mise en relation avec un réservoir tampon ayant une haute pression. Le carburant de chaque réservoir élémentaire est ensuite conduit hors du réservoir élémentaire pour être monté en pression par une pompe mécanique et un échangeur de chaleur. La pression nécessaire est importante et impose d'utiliser une pompe mécanique et un échangeur de chaleur de grande capacité. Les inconvénients cités précédemment demeurent.

De manière incidente encore, on connaît également dans l'art antérieur un système de chauffage de carburant dans un récipient préalablement à son injection dans un réservoir tampon. Le récipient est équipé de nombreux capteurs afin de permettre d'ajouter du fluide froid ou de vider le récipient en cas de montée en température non contrôlée. Une telle architecture présente un risque de refoulement important en sortie du récipient étant donné que le réservoir tampon possède une pression plus élevée que le réservoir d'entrée, ce qui affecte la sécurité. Aussi, il est nécessaire de prévoir une pompe haute pression qui possède les inconvénients précités.

En outre, en cas de pression trop élevée et d'activation d'un mécanisme de sécurité, l'alimentation du réservoir tampon doit être stoppée, ce qui impose de surdimensionner le réservoir tampon afin de tenir compte des périodes de non-alimentation.

### PRESENTATION DE L'INVENTION

A cet effet, l'invention concerne un système de conditionnement de carburant configuré pour alimenter un turbomoteur d'aéronef à partir de carburant issu d'un réservoir cryogénique, le système de conditionnement comprenant un circuit de carburant relié en entrée au réservoir cryogénique et en sortie au turbomoteur, un flux de carburant circulant d'amont en aval dans le circuit de carburant.

Le système est remarquable par le fait que le circuit de carburant comporte un réservoir tampon pour alimenter le turbomoteur et une pluralité de modules de compression configurés pour alimenter le réservoir tampon, chaque module de compression comprenant :
- un réservoir élémentaire de volume fixe,
- une source de chaleur élémentaire configurée pour augmenter la température du carburant dans le réservoir élémentaire de manière isochore,
- une vanne d'entrée reliant le réservoir élémentaire à une partie amont du circuit de carburant,
- une vanne de sortie reliant le réservoir élémentaire au réservoir tampon et
- une vanne de dégazage reliant le réservoir élémentaire au réservoir cryogénique par un circuit de retour dans lequel circule un flux gazeux.

La compression est réalisée de manière isochore et non uniquement de manière mécanique, ce qui permet d'éliminer les inconvénients relatifs à une pompe mécanique présentés précédemment. En outre, une telle compression isochore permet de tirer avantage des sources de chaleur élémentaire qui sont disponibles dans un environnement aéronautique pour chauffer le flux de carburant stocké de manière cryogénique. Lors du dégazage d'un réservoir élémentaire, le flux gazeux se détend de manière isenthalpique dans le réservoir cryogénique, ce qui permet d'équilibrer les pressions pour permettre un nouveau cycle d'utilisation en toute sécurité. Le dégazage permet de réduire la pression afin de permettre un remplissage des réservoirs élémentaires à partir du réservoir cryogénique basse pression sans recourir à une pompe haute pression. En outre, un circuit de retour permet de maintenir une pression suffisante dans le réservoir cryogénique pour alimenter les réservoirs élémentaires même lorsque le niveau de carburant baisse au cours du temps dans le réservoir cryogénique.

L'utilisation d'un réservoir tampon permet d'apporter de la flexibilité pour le turbomoteur qui dispose en permanence de carburant à une température et à une pression proche des conditions optimales d'injection. Un tel réservoir tampon permet en outre d'être rempli de manière progressive au cours du temps suite à la compression isochore.

De manière préférée, les modules de compression sont montés en parallèle de manière à utiliser de manière indépendantes diverses sources de chaleur élémentaire. De préférence, le système de conditionnement comporte au moins quatre modules de compression pour permettre d'être utilisés de manière déphasée.

De préférence, chaque source de chaleur élémentaire fournit des calories issues du turbomoteur et/ou de l'aéronef. Ainsi, l'énergie apportée provient de sources de chaleur disponibles et n'est pas générée uniquement pour la compression isochore, ce qui améliore le bilan énergétique.

Selon un aspect particulier, au moins un module de compression comprend au moins deux réservoirs élémentaires montés en série de manière à réaliser des paliers de compression. Chaque module de compression permet de réaliser une compression progressive, ce qui permet de réduire le volume des réservoirs élémentaires.

Selon un autre aspect particulier, au moins un module de compression comprend une vanne d'apport configurée pour monter la pression dans le réservoir élémentaire par mise en communication du réservoir élémentaire avec le réservoir tampon. Ainsi, la mise en pression peut être réalisée préliminairement pour le flux de carburant en sortie du réservoir tampon puis la mise en pression peut être finalisée par compression isochore. Un tel module de compression est avantageux lorsque la puissance de la source élémentaire n'est pas capable à elle seule d'assurer la montée en pression. Un tel module de compression est en outre avantageux lorsque le carburant est prélevé en aval d'un échangeur disposant d'une source de chaleur importante, en particulier, issue du turbomoteur.

De préférence, le système de conditionnement comprend au moins un premier échangeur configuré pour prélever des calories au flux gazeux circulant dans le circuit de retour et les transmettre au flux de carburant.

De préférence, le système de conditionnement comprend au moins un deuxième échangeur, en amont des modules de compression, configuré pour prélever des calories à une source de chaleur et les transmettre au flux de carburant. Un tel deuxième échangeur est avantageux pour rendre gazeux le flux de carburant dans les modules de compression. De manière préférée, la source de chaleur du deuxième échangeur est un flux de carburant prélevé en aval du réservoir tampon, de préférence, en aval d'un troisième échangeur. Un apport de chaleur par du carburant réchauffé permet d'éviter toute condensation pouvant survenir avec un flux d'air.

De préférence, le système de conditionnement comprend au moins un troisième échangeur, en aval des modules de compression, configuré pour prélever des calories à une source de chaleur et les transmettre au flux de carburant préliminairement à son injection dans le turbomoteur.

De préférence, le système de conditionnement comprend au moins une pompe mécanique d'appoint montée en amont des modules de compression de manière à adapter l'état thermodynamique du flux de carburant à l'entrée des modules de compression.

De préférence, le système de conditionnement comprend un circuit de décharge d'un flux gazeux issu du réservoir cryogénique et un organe de décharge, positionné en amont des modules de compression, configuré pour enrichir le flux de carburant avec du flux gazeux. Ainsi, toute surpression dans le réservoir cryogénique est évitée et le flux gazeux participe de manière indirecte à l'alimentation du réservoir tampon.

De préférence, l'organe de décharge est une pompe à jet dont la structure est simple et dépourvue de pièce mécanique mobile.

De préférence, le système de conditionnement comprend un circuit d'injection d'un flux gazeux issu du réservoir cryogénique dans le réservoir tampon, le circuit d'injection comprenant au moins un module de compression isochore. Ainsi, le flux gazeux participe de manière directe à l'alimentation du réservoir tampon. Un circuit de décharge et un circuit d'injection peuvent être utilisés de manière cumulative ou alternative.

L'invention concerne aussi un ensemble d'au moins un réservoir cryogénique, d'un turbomoteur d'aéronef et d'un système de conditionnement, tel que présenté précédemment, reliant fluidiquement le réservoir cryogénique et le turbomoteur d'aéronef.

L'invention concerne également un procédé de conditionnement en carburant d'un turbomoteur d'aéronef à partir de carburant issu d'un réservoir cryogénique au moyen d'un système de conditionnement, tel que présenté précédemment, procédé dans lequel :
- les modules de compression réalisent une compression isochore du flux de carburant issu du réservoir cryogénique pour alimenter le réservoir tampon, et
- le réservoir tampon alimente le turbomoteur avec un flux de carburant.

De préférence, au moins deux modules de compression sont commandés de manière déphasée pour alimenter le réservoir tampon afin de permettre une alimentation continue.

De manière préférée, le procédé comporte des étapes de remplissage, de compression isochore, de détente et dégazage pour chaque module de compression. Selon un aspect de l'invention, les étapes sont réalisées de manière déphasée pour au moins deux modules de compression. Selon un autre aspect de l'invention, les étapes sont réalisées de manière simultanée pour au moins deux modules de compression.

### PRESENTATION DES FIGURES

L'invention sera mieux comprise à la lecture de la description qui va suivre, donnée à titre d'exemple, et se référant aux figures suivantes, données à titre d'exemples non limitatifs, dans lesquelles des références identiques sont données à des objets semblables.
La [Fig.1] est une représentation schématique d'un système de conditionnement en carburant selon l'art antérieur.
La [Fig.2] est une représentation schématique d'un système de conditionnement en carburant selon une première forme de réalisation de l'invention.
La [Fig.3] est une représentation schématique rapprochée des modules de compression du système de conditionnement de la [Fig.2].
La [Fig.4A] est une représentation schématique d'un module de compression au cours d'une étape de remplissage.
La [Fig.4B] est une représentation schématique d'un module de compression au cours d'une étape de compression isochore.
La [Fig.4C] est une représentation schématique d'un module de compression au cours d'une étape de détente.
La [Fig.4D] est une représentation schématique d'un module de compression au cours d'une étape de dégazage.
La [Fig.5] est une représentation schématique des modules de compression de la [Fig.3] au cours d'étapes différentes.
La [Fig.6] est une représentation schématique d'un système de conditionnement en carburant selon une deuxième forme de réalisation de l'invention avec une pompe mécanique d'appoint.
La [Fig.7] est une représentation schématique d'un système de conditionnement en carburant selon une troisième forme de réalisation de l'invention avec des modules de compression comprenant des réservoirs élémentaires en série.
La [Fig.8] est une représentation schématique d'un système de conditionnement en carburant selon une quatrième forme de réalisation de l'invention avec un apport de calories par le flux de carburant en sortie du circuit de carburant.
La [Fig.9] est une représentation schématique d'un système de conditionnement en carburant selon une cinquième forme de réalisation de l'invention avec un circuit d'injection de carburant gazeux.
La [Fig.10] est une représentation schématique d'un système de conditionnement en carburant selon une sixième forme de réalisation de l'invention dans lequel chaque module de compression comporte une vanne d'apport.
Il faut noter que les figures exposent l'invention de manière détaillée pour mettre en œuvre l'invention, lesdites figures pouvant bien entendu servir à mieux définir l'invention le cas échéant.

### DESCRIPTION DETAILLEE DE L'INVENTION

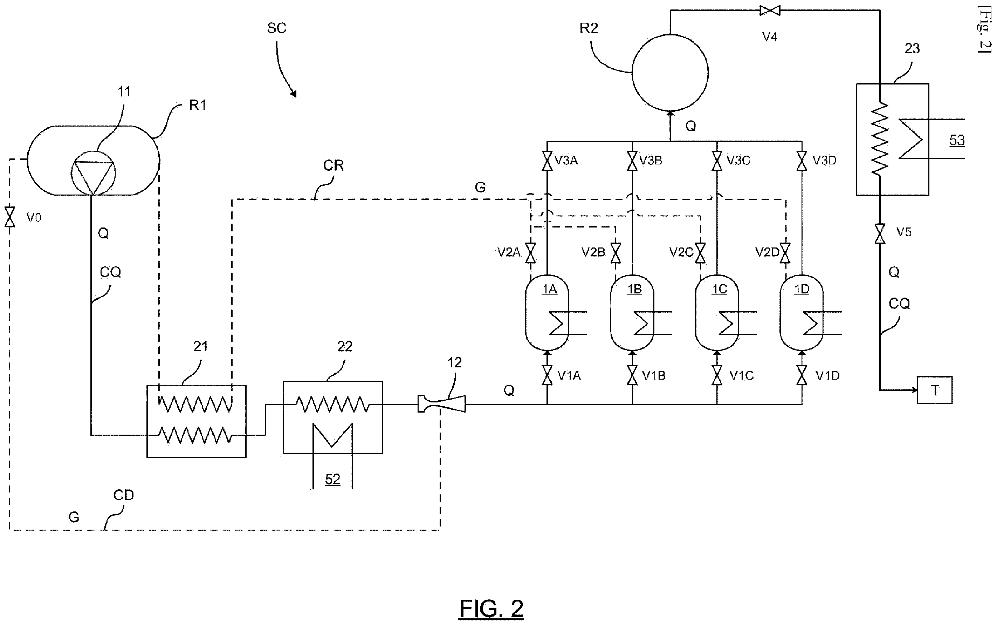

En référence à la [Fig.2], il est représenté un système de conditionnement de carburant SC configuré pour alimenter un turbomoteur d'aéronef T à partir de carburant issu d'un réservoir cryogénique R1.

Dans cet exemple, le carburant est de l'hydrogène liquide mais l'invention s'applique à d'autres types de carburant, par exemple, du méthane liquide ou du gaz naturel liquéfié.

Selon une première forme de réalisation, en référence à la [Fig.2], le système de conditionnement SC comprend un circuit de carburant CQ (trait continu sur la [Fig.2]) relié en entrée au réservoir cryogénique R1 et en sortie au turbomoteur T. Un flux de carburant Q circule d'amont en aval dans le circuit de carburant CQ afin de monter en pression et en température pour pouvoir être injecté dans la chambre de combustion du turbomoteur T sans risque de givrer des injecteurs de carburant.

Le circuit de carburant CQ comporte un réservoir tampon R2 pour alimenter le turbomoteur T, en particulier, pour répondre aux besoins variables du turbomoteur T. Autrement dit, le réservoir tampon R2 permet d'assurer un débit continu sous pression qui est acheminé vers le turbomoteur T. Par la suite, on désigne par « circuit de carburant amont » le circuit de carburant situé en amont du réservoir tampon R2 et par « circuit de carburant aval » le circuit de carburant situé en aval du réservoir tampon R2.

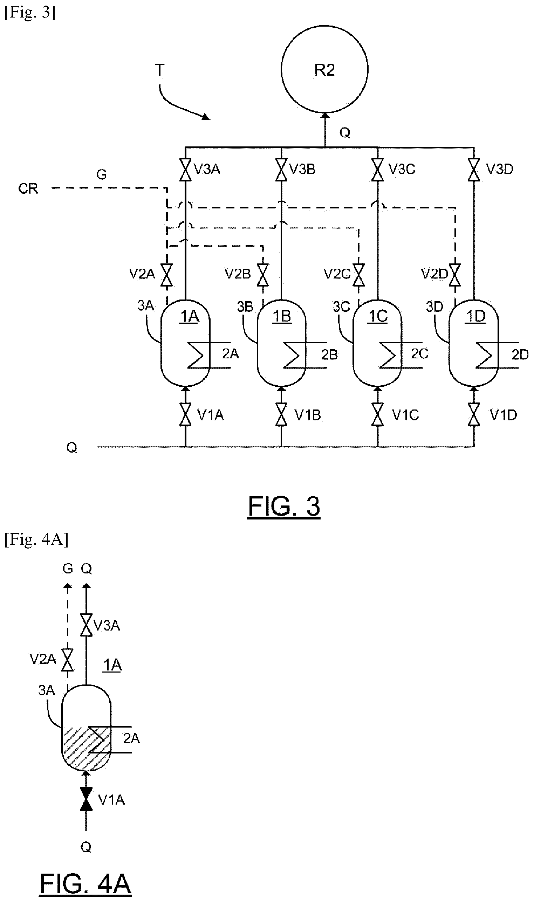

Selon l'invention, le circuit de carburant CQ comporte une pluralité de modules de compression 1A-1D configurés pour alimenter le réservoir tampon R2. Autrement dit, les modules de compression 1A-1D sont positionnés dans le circuit de carburant amont comme illustré à la [Fig.2]. En référence à la [Fig.3] représentant une vue rapprochée, chaque module de compression 1A-1D comprend :
- un réservoir élémentaire 3A-3D de volume fixe,
- une source de chaleur élémentaire 2A-2D configurée pour augmenter la température du carburant dans le réservoir élémentaire 3A-3D de manière isochore,
- une vanne d'entrée V1A-V1D reliant le réservoir élémentaire 3A-3D à une partie amont du circuit de carburant CQ,
- une vanne de sortie V3A-V3D reliant le réservoir élémentaire 3A-3D au réservoir tampon R2 et
- une vanne de dégazage V2A-V2D reliant le réservoir élémentaire 3A-3D au réservoir cryogénique R1 par un circuit de retour CR dans lequel circule un flux de carburant gazeux, désigné flux gazeux G.

Grâce à l'invention, il n'est pas nécessaire d'utiliser exclusivement une pompe mécanique, peu performante dans un contexte cryogénique, pour augmenter la pression du carburant. Une compression isochore à partir d'une pluralité de sources de chaleur 2A-2D permet de chauffer une pluralité de volumes élémentaires afin de faire augmenter la pression du carburant qui alimente le réservoir tampon R2. Les inconvénients d'une pompe mécanique (étanchéité, lubrification et rendement) sont avantageusement éliminés. De plus, on tire avantage de la faible température du carburant et de la présence de diverses sources de chaleur élémentaires pour réaliser une compression isochore performante et économique.

Les sources de chaleur élémentaire 2A-2D sont issues de l'aéronef et/ou du turbomoteur T et peuvent être de différentes natures. Les calories peuvent provenir par exemple de l'huile de lubrification, de la turbine du turbomoteur T, de l'air cabine, des systèmes électriques et électroniques et/ou d'un système de chauffage indépendant intégré à l'aéronef.

Les vannes d'entrée V1A-V1D permettent de piloter le débit du flux de carburant Q entrant dans les réservoirs élémentaire 3A-3D. Les vanne de sortie V3A-V3D sont de type détendeur et permettent de détendre le flux de carburant Q après sa compression isochore dans le réservoir tampon R2. Les vannes de dégazage V2A-V2D sont également de type détendeur et assurent le dégazage des réservoirs élémentaires 3A-3D vers le réservoir cryogénique R1. En effet, à la fin de la phase de détente, un réservoir élémentaire 3A-3D doit être dégazé pour réduire sa pression afin de pouvoir être rempli de nouveau. De manière préférée, afin de contrôler le dégazage, les vannes sont commandables et reliées à un module de contrôle (non représenté) qui permet de contrôler leur degré d'ouverture et leur activation notamment de manière séquencée.

En référence à la [Fig.2], le circuit de retour CR permet de ramener le flux gazeux G dans le réservoir cryogénique R1 pour augmenter le ciel gazeux dans le réservoir cryogénique R1, ce qui entraine une augmentation de la pression dans ce dernier. Afin de limiter la pression dans le réservoir cryogénique R1, le système de conditionnement SC comporte un circuit de décharge CD qui relie une partie supérieure du réservoir cryogénique R1 à un organe de décharge 12 permettant d'injecter le flux gazeux G dans le circuit de carburant CQ en amont des modules de compression 1A-1D. Le circuit de décharge CD comporte une vanne de décharge V0 qui s'active à partir d'un seuil de pression prédéterminé dans le réservoir cryogénique R1 permettant d'évacuer un débit secondaire comprenant le flux de carburant gazeux G.

En pratique, l'organe de décharge 12 permet d'aspirer un flux gazeux G lors d'un prélèvement d'un débit principal de carburant en phase liquide dans une partie inférieure du réservoir cryogénique R1. Dans cet exemple, l'organe de décharge 12 se présente sous la forme d'une pompe à jet qui permet, par effet Venturi, de convertir l'énergie de pression du flux de carburant liquide Q (débit principal) en énergie cinétique pour entraîner un flux de carburant gazeux Q (débit secondaire). Une telle pompe à jet est également désignée pompe à effet Venturi. En référence à la [Fig.2], la pompe à jet possède une tuyère de forme convergente-divergente (d'amont vers l'aval) de manière à convertir l'énergie de pression en énergie cinétique puis convertir de manière inverse l'énergie cinétique en énergie de pression. Une pompe à jet ne comporte pas d'entrainement mécanique et ne possède pas les défauts d'une pompe mécanique présentée précédemment. Il va de soi que l'organe de décharge 12 pourrait se présenter sous d'autres formes, par exemple, une association d'un échangeur et d'une vanne afin de liquéfier le flux gazeux avant son injection avec le flux de carburant liquide Q. L'organe de décharge 12 est de préférence passif et ne comporte ainsi pas d'organe tournant.

La montée en pression du flux de carburant Q par compression isochore est réalisée dans les modules de compression 1A-1D montés en parallèle de manière à réaliser chacun une montée en pression indépendante. Dans cet exemple, il a été présenté quatre modules de compression 1A-1D mais il va de soi que leur nombre pourrait être différent en fonction de différents facteurs tels que la taille des réservoirs élémentaires 3A-3D, la puissance des sources de chaleur élémentaire 2A-2D, la durée de remplissage, la durée de compression, la durée de détente et la durée de dégazage. Comme cela sera présenté par la suite, le réservoir tampon R2 est alimenté par les réservoirs élémentaires 3A-3D et possède une pression inférieure à celle atteinte dans les réservoirs élémentaires 3A-3D en fin de la phase de compression.

En référence à la [Fig.2], outre les modules de compression 1A-1D, le circuit de carburant amont comporte en outre une pompe hydraulique de gavage 11, de préférence immergée dans réservoir cryogénique R1, configurée pour prélever le carburant en phase liquide et augmenter la pression du flux de carburant Q de quelques bars, en particulier, de 1 à 3 bars. L'utilisation d'une pompe hydraulique de gavage 11, c'est-à-dire une pompe basse pression, est moins problématique qu'une pompe haute pression.

En référence à la [Fig.2], le circuit de carburant CQ comporte, entre la pompe hydraulique de gavage 11 et l'organe de décharge 12, un premier échangeur 21 et un deuxième échangeur 22 qui sont montés en série.

Le premier échangeur 21 est configuré pour prélever des calories au flux gazeux G circulant dans le circuit de retour CR et les transmettre au flux de carburant Q. Le flux gazeux X est ainsi refroidi avant d'être injecté dans le réservoir cryogénique R1 tandis que le flux de carburant Q se réchauffe de manière progressive.

Le deuxième échangeur 22 est configuré pour prélever des calories à une source de chaleur 52 et les transmettre au flux de carburant Q afin de contrôler sa température et son état thermodynamique (liquide, vapeur, diphasique ou supercritique) en entrée des réservoirs élémentaires 3A-3D des modules de compression 1A-1D. De manière préférée, le deuxième échangeur 22 permet de gazéifier le flux de carburant Q. L'influence de l'état thermodynamique sera présentée par la suite. Dans le cas d'une alimentation en liquide en entrée des réservoirs élémentaires 3A-3D, le deuxième échangeur 22 pourrait être supprimé.

Toujours en référence à la [Fig.2], le circuit de carburant CQ comporte, en aval du réservoir tampon R2, une première vanne de régulation V4, un troisième échangeur 23 et une deuxième vanne de régulation V5.

La première vanne de régulation V4 est de type détendeur, elle assure la stabilisation de la pression en sortie du réservoir tampon R2. La pression en aval de la première vanne de régulation V4 est inférieure à celle du réservoir tampon R2, et correspond à celle requise par le turbomoteur T, qui varie en fonction de la phase de vol de l'aéronef.

La deuxième vanne de régulation V5 est de type détendeur et permet de commander le débit de carburant qui est fourni au turbomoteur T. De préférence, la température du flux de carburant Q en entrée du réservoir tampon R2 est proche de la température ambiante pour éviter d'alourdir sa structure par l'ajout des isolants.

Le troisième échangeur 23 permet, pour sa part, de chauffer le flux de carburant Q à partir d'une troisième source de chaleur 53 préliminairement à son injection. Ce complément d'énergie thermique permet de régler précisément la température du flux de carburant Q. Ainsi, le flux de carburant Q est injecté à une température optimale.

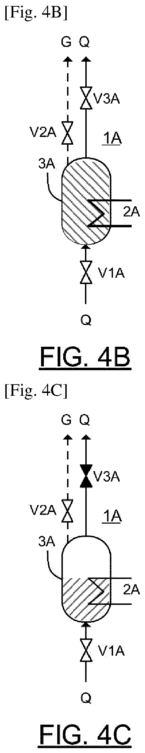

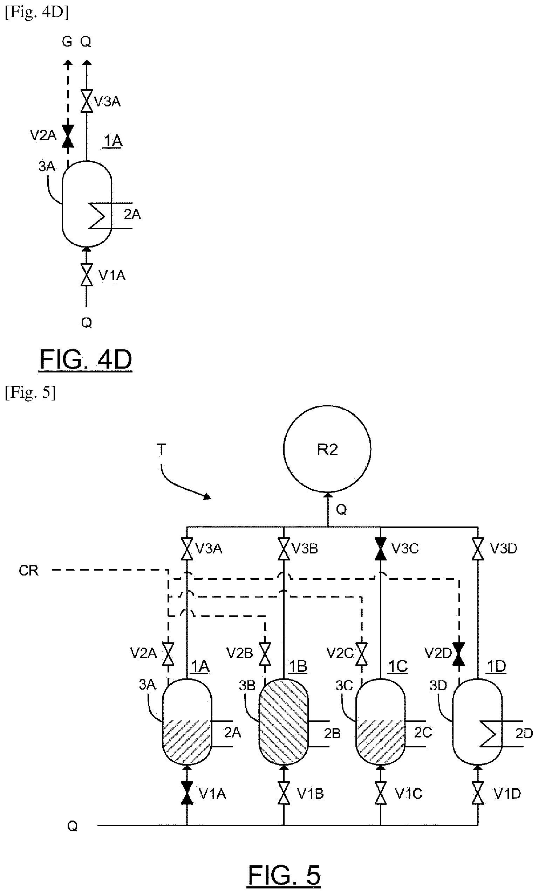

En référence aux [Fig.4A] à 4D, il va dorénavant être présenté différentes étapes d'un cycle d'utilisation d'un module de compression 1A-1D : remplissage ([Fig.4A]), compression ([Fig.4B]), détente ([Fig.4C]) et dégazage ([Fig.4D]). Par souci de clarté et de concision, ces étapes ne seront présentées qu'en relation avec le premier module de compression 1A. Le fonctionnement des autres modules de compression est analogue et ne sera pas présenté plus en détails. Dans cet exemple, une vanne en position ouverte est représentée en noir sur les figures 4A à 4D.

Au cours de l'étape de remplissage, en référence à la [Fig.4A], la vanne d'entrée V1A est ouverte, les autres étant fermées. Le flux de carburant Q pénètre dans le réservoir élémentaire 3A. En pratique, l'étape de remplissage est mise en œuvre à une pression légèrement inférieure à celle du carburant liquide en sortie de la pompe hydraulique de gavage 11, aux pertes de charge près.

Au cours de l'étape de compression isochore, en référence à la [Fig.4B], toutes les vannes sont fermées. La source de chaleur élémentaire 2A fournit des calories au réservoir élémentaire 3A dont le volume demeure fixe, ce qui augmente la pression du flux de carburant Q dans le réservoir élémentaire 3A. En fonction de la phase du vol de l'aéronef, la pression en fin de compression peut atteindre des valeurs relativement élevées, en particulier, supérieures à 150 bars.

Au cours de l'étape de détente, en référence à la [Fig.4C], la vanne de sortie V3A est ouverte, les autres étant fermées. Le flux de carburant Q se détend dans le réservoir tampon R2. La pression dans le réservoir élémentaire 3A chute tandis que celle dans le réservoir tampon R2 augmente. La pression dans le réservoir tampon R2 peut atteindre des valeurs relativement élevées, en particulier, supérieures à 100 bars.

Au cours de l'étape de dégazage, en référence à la [Fig.4D], la vanne de dégazage V2A est ouverte, les autres étant fermées. Le réservoir élémentaire 3A communique fluidiquement avec le réservoir cryogénique R1 via le circuit de retour CR pour permettre la circulation du flux gazeux G. La pression dans le réservoir élémentaire 3A devient égale à celle du réservoir cryogénique R1, de l'ordre de 2 bars. A la fin de l'étape de dégazage, la vanne de dégazage V2A est refermée et un nouveau cycle peut débuter.

Grâce au cycle thermodynamique, chaque module de compression 1A-1D permet de monter en pression une partie du flux de carburant Q pour remplir le réservoir tampon R2. L'utilisation d'au moins quatre modules de compression 1A-1D en parallèle est avantageuse pour exploiter ce cycle en 4 temps. Les modules de compression 1A-1D sont de préférence déphasés pour permettre d'alimenter de manière continue le réservoir tampon R2. En référence à la [Fig.5], à un instant donné, le premier module de compression 1A met en œuvre l'étape de remplissage, le deuxième module de compression 1B met en œuvre l'étape de compression isochore, le troisième module de compression 1C met en œuvre l'étape de détente et le quatrième module de compression 1D met en œuvre l'étape de dégazage. Il va néanmoins de soi que plusieurs modules de compression 1A-1D pourraient mettre en œuvre de manière simultanée les mêmes étapes.

De manière générale, en référence à la [Fig.2], la pompe hydraulique de gavage 11 alimente successivement les échangeurs 21, 22 puis l'organe de décharge 12 qui permet d'injecter du flux gazeux G, prélevé en partie supérieure du réservoir cryogénique R1, avec le flux de carburant G prélevé en partie inférieure du réservoir cryogénique R1. Le flux de carburant Q, ici enrichi d'un flux gazeux G, est introduit dans les modules de compression 1A-1D qui font monter en pression le flux de carburant Q et remplissent le réservoir tampon R2. Le flux gazeux G issu des modules de compression 1A-1D est réinjecté dans le réservoir cryogénique R1 en passant par le premier échangeur 21.

En fonction des besoins du turbomoteur T, un flux de carburant G est prélevé dans le réservoir tampon R2 puis réchauffé de manière préalable par le troisième échangeur 23 à sa température optimale pour l'injection. La présence d'un réservoir tampon R2 permet d'assurer une flexibilité lors du fonctionnement.

Les modules de compression 1A-1D peuvent être alimentés selon différents états thermodynamiques différents. Par la suite, on désigne par P et T la pression et la température du flux de carburant Q en entrée des modules de compression 1A-1D. On désigne par Pc et Tc la pression critique et la température critique du carburant considéré.

L'alimentation peut être réalisée à partir d'un flux de carburant Q en régime subcritique (P < Pc et T < Tc) à l'état liquide (titre vapeur <1), diphasique (0<titre vapeur<1) ou vapeur (titre vapeur >1). Dans ces cas, la pompe hydraulique de gavage 11 est suffisante pour acheminer le flux de carburant Q (initialement à l'état liquide subcritique) du réservoir principal R1 vers les réservoirs élémentaires 3A-3D.

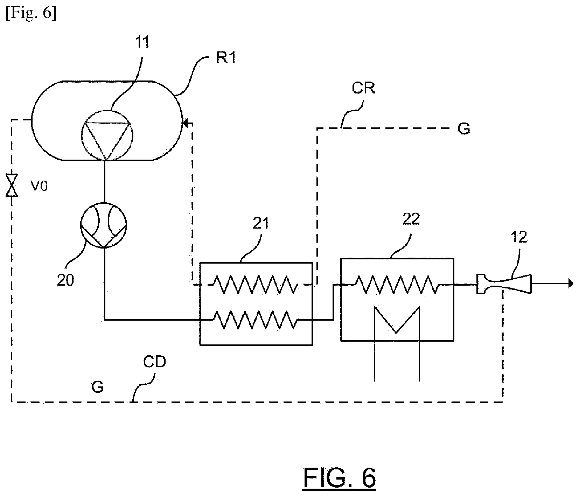

L'alimentation peut être réalisée à partir d'un flux de carburant Q en liquide comprimé (P > Pc et T < Tc), ou en supercritique (P > Pc et T > Tc). Dans ces deux cas, en référence à la [Fig.6], une pompe mécanique d'appoint 20 est intercalée entre la pompe hydraulique de gavage 11 et le premier échangeur 21, afin de comprimer le flux de carburant Q à une pression supérieure à la pression critique. La pompe mécanique d'appoint 20 assure uniquement une partie de la compression, de l'ordre de quelques bars pour dépasser la pression critique (aux alentours de 13 bars pour l'hydrogène par exemple), le complément de montée en pression est avantageusement assuré par la compression isochore des modules de compression 1A-1D.

L'alimentation peut être réalisée à partir d'un flux de carburant Q en gaz surchauffé (P < Pc et T > Tc). De manière analogue à précédemment, la pompe hydraulique de gavage 11 est suffisante pour acheminer le flux de carburant Q (initialement à l'état liquide subcritique) du réservoir principal R1 vers les réservoirs élémentaires 3A-3D.

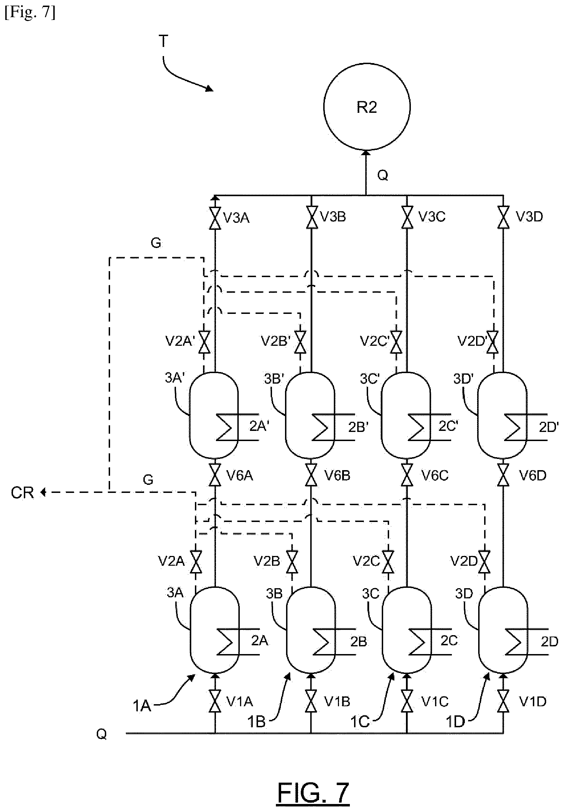

De manière alternative, en référence à la [Fig.7], chaque module de compression 1A-1D peut comprendre au moins deux réservoirs élémentaires reliés en série. Une disposition en série permet une compression multi-étage, chacun des réservoirs élémentaires correspondant à un étage de compression. Une telle configuration permet d'utiliser des réservoirs élémentaires plus petits pour former un système de conditionnement SC plus compact.

En référence à la [Fig.7], il est représenté un exemple de quatre modules de compression 1A-1D, chacun comprenant :
- un premier réservoir élémentaire 3A-3D avec une source de chaleur élémentaire 2A-2D,
- un deuxième réservoir élémentaire 3A'-3D' avec une source de chaleur élémentaire 2A'-2D',
- une vanne d'entrée V1A-V1D reliant le premier réservoir élémentaire 3A-3D à une partie amont du circuit de carburant CQ,
- une vanne de sortie V3A-V3D reliant le deuxième réservoir élémentaire 3A'-3D' au réservoir tampon R2,
- une première vanne de dégazage V2A-V2D reliant le premier réservoir élémentaire 3A-3D au réservoir cryogénique R1 par un circuit de retour CR,
- une deuxième vanne de dégazage V2A'-V2D' reliant le deuxième réservoir élémentaire 3A'-3D' au réservoir cryogénique R1 par le circuit de retour CR,
- une vanne de liaison V6A-V6D reliant en série le premier réservoir élémentaire 3A-3D et le deuxième réservoir élémentaire 3A'-3D'.

Ainsi, pour chaque module de compression 1A-1D, le flux de carburant Q est monté en pression dans un premier réservoir élémentaire 3A-3D puis monté en pression dans un deuxième réservoir élémentaire 3A'-3D'.

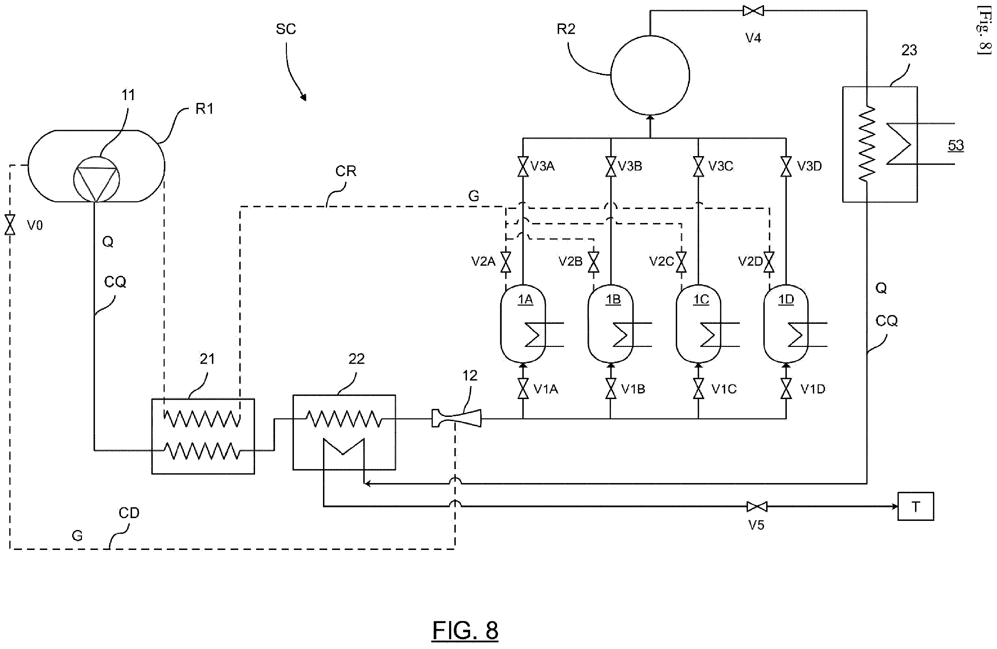

Selon une variante de l'invention, en référence à la [Fig.8], le deuxième échangeur 22 prélève des calories dans le circuit de carburant CQ en aval du réservoir tampon R2 (dans le circuit de carburant aval) afin de réchauffer le flux de carburant Q en sortie du réservoir cryogénique R1. L'utilisation d'un flux de carburant chaud Q comme source de chaleur en lieu et place d'un flux d'air chaud permet d'éviter la condensation et/ou le givrage dans le deuxième échangeur 22.

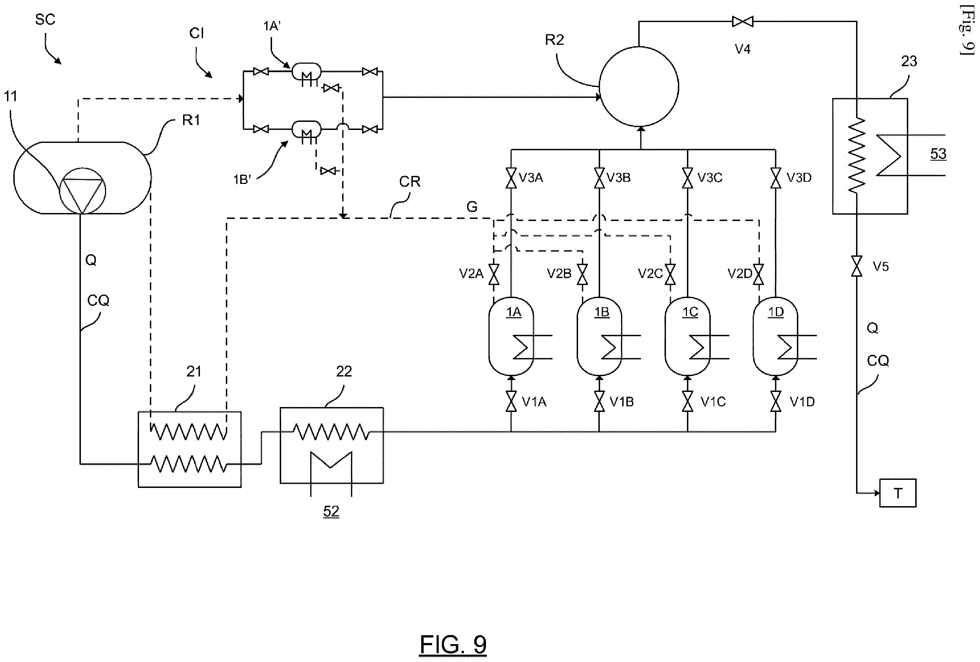

Selon une autre variante de l'invention, en référence à la [Fig.9], de manière alternative ou cumulative à un organe de décharge 12 pour consommer le flux gazeux G en excès dans le réservoir cryogénique R1, le système de conditionnement SC comporte un circuit d'injection CI reliant le réservoir cryogénique R1, le réservoir tampon R2 et le circuit de retour CR. Le circuit d'injection CI comporte dans cet exemple deux modules de compression 1A', 1B' de structure analogue à précédemment pour alimenter le réservoir tampon R2 directement avec le flux gazeux G issu du réservoir cryogénique R1.

Chaque module de compression 1A', 1B' permet l'admission d'un flux gazeux G issu du réservoir cryogénique R1 dans un réservoir élémentaire afin d'être monté en pression pour alimenter le réservoir tampon R2. Le flux gazeux G issu du dégazage des modules de compression 1A', 1B' est introduit dans le circuit de retour CR afin d'être refroid par le premier échangeur 21 avant d'être réintroduit dans le réservoir cryogénique R1. L'alimentation du réservoir tampon R2 peut ainsi être réalisée par la phase liquide et la phase gazeuse du carburant du réservoir cryogénique R1.

Un tel circuit d'injection CI est avantageux lorsqu'un organe de décharge 12 n'est pas capable d'éliminer toute la surpression gazeuse par effet Venturi.

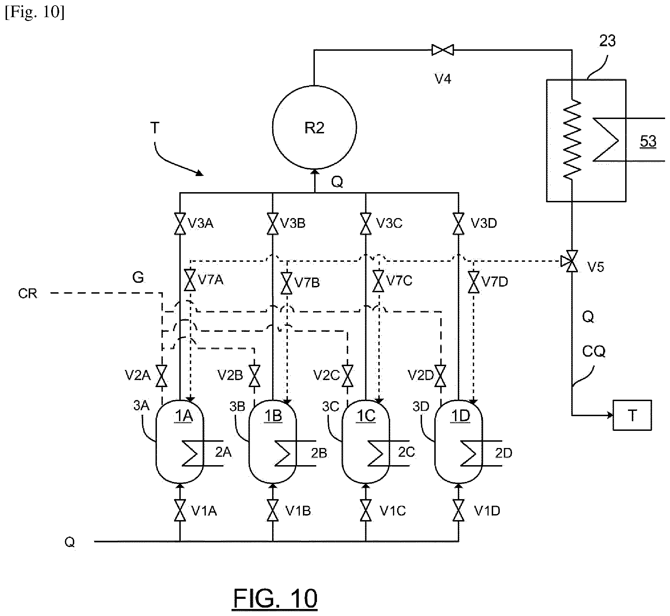

Selon une autre variante de l'invention, en référence à la [Fig.10], la montée en pression dans un module de compression 1A-1D est réalisée par injection de carburant prélevé en aval du réservoir tampon R2, autrement dit, par un flux de carburant réchauffé. A cet effet, chaque module de compression 1A-1D comporte une vanne d'apport V7A-V7D qui prélève un flux de carburant au niveau de la deuxième vanne de régulation V5 qui est une vanne trois voies dans cette variante. Pour une telle configuration, les étapes de remplissage, de détente et de dégazage sont identiques et ne seront pas présentées de nouveau.

Au cours de l'étape de compression isochore, dans un premier temps, toutes les vannes sont fermées à l'exception de la vanne d'apport V7A-V7D de manière à ce que la pression dans le réservoir tampon R2 s'égalise avec celle du réservoir élémentaire 3A-3D. Ainsi, la vanne d'apport V7A-V7D permet une première mise en pression. Dans un deuxième temps, toutes les vannes sont fermées et la source de chaleur élémentaire 2A-2D fournit des calories au réservoir élémentaire 3A-3D dont le volume demeure fixe, ce qui augmente la pression du flux de carburant Q dans le réservoir élémentaire 3A-3D. Autrement dit, une deuxième mise en pression est réalisée par apport thermique. Une telle variante est particulièrement avantageuse lorsque les sources élémentaires 2A-2D ne sont pas capables à elles seules d'assurer toute la montée en pression dans les réservoirs élémentaires 3A-3D, par exemple, lorsque les réservoirs élémentaires 3A-3D sont positionnés loin des sources élémentaires 2A-2D et que le troisième échangeur 23 est proche du turbomoteur T et dispose d'une source de chaleur importante permettant d'apporter de l'énergie thermique au flux de carburant Q de manière optimale.

## Revendications

1. Système de conditionnement de carburant (SC) configuré pour alimenter un turbomoteur d'aéronef (T) à partir de carburant (Q) issu d'un réservoir cryogénique (R1), le système de conditionnement (SC) comprenant un circuit de carburant (CQ) relié en entrée au réservoir cryogénique (R1) et en sortie au turbomoteur (T), un flux de carburant (Q) circulant d'amont en aval dans le circuit de carburant (CQ), système **caractérisé par le fait que** le circuit de carburant (CQ) comporte un réservoir tampon (R2) pour alimenter le turbomoteur (T) et une pluralité de modules de compression (1A-1D) configurés pour alimenter le réservoir tampon (R2), chaque module de compression (1A-1D) comprenant :
• un réservoir élémentaire (3A-3D) de volume fixe,
• une source de chaleur élémentaire (2A-2D) configurée pour augmenter la température du carburant dans le réservoir élémentaire (3A-3D) de manière isochore,
• une vanne d'entrée (V1A-V1D) reliant le réservoir élémentaire (3A-3D) à une partie amont du circuit de carburant (CQ),
• une vanne de sortie (V3A-V3D) reliant le réservoir élémentaire (3A-3D) au réservoir tampon (R2) et
• une vanne de dégazage (V2A-V2D) reliant le réservoir élémentaire (3A-3D) au réservoir cryogénique (R1) par un circuit de retour (CR) dans lequel circule un flux gazeux (G).

2. Système de conditionnement (SC) selon la revendication 1, dans lequel les modules de compression (1A-1D) sont montés en parallèle.

3. Système de conditionnement (SC) selon l'une des revendications 1 à 2, dans lequel chaque source de chaleur élémentaire (2A-2D) fournit des calories issues du turbomoteur (T) et/ou de l'aéronef.

4. Système de conditionnement (SC) selon l'une des revendications 1 à 3, dans lequel au moins un module de compression (1A-1D) comprend au moins deux réservoirs élémentaires (3A-3D, 3A'-3D') montés en série.

5. Système de conditionnement (SC) selon l'une des revendications 1 à 4, dans lequel au moins un module de compression (1A-1D) comprend une vanne d'apport (V7A-V7D) configurée pour monter la pression dans le réservoir élémentaire (3A-3D) par mise en communication du réservoir élémentaire (3A-3D) avec le réservoir tampon (R2).

6. Système de conditionnement (SC) selon l'une des revendications 1 à 5, comprenant au moins un premier échangeur (21) configuré pour prélever des calories au flux gazeux (G) circulant dans le circuit de retour (CR) et les transmettre au flux de carburant (Q).

7. Système de conditionnement (SC) selon l'une des revendications 1 à 6, comprenant au moins un deuxième échangeur (22), en amont des modules de compression (1A-1D), configuré pour prélever des calories à une source de chaleur (52) et les transmettre au flux de carburant (Q).

8. Système de conditionnement (SC) selon l'une des revendications 1 à 7, comprenant au moins un troisième échangeur (23), en aval des modules de compression (1A-1D), configuré pour prélever des calories à une source de chaleur (53) et les transmettre au flux de carburant (Q) préliminairement à son injection dans le turbomoteur (T).

9. Système de conditionnement (SC) selon l'une des revendications 1 à 8, comprenant au moins une pompe mécanique d'appoint (20) montée en amont des modules de compression (1A-1D).

10. Système de conditionnement (SC) selon l'une des revendications 1 à 9, comprenant un circuit de décharge (CD) d'un flux gazeux (G) issu du réservoir cryogénique (R1) et un organe de décharge (12), positionné en amont des modules de compression (1A-1D), configuré pour enrichir le flux de carburant (Q) avec du flux gazeux (G).

11. Système de conditionnement (SC) selon l'une des revendications 1 à 10, comprenant un circuit d'injection (CI) d'un flux gazeux (G) issu du réservoir cryogénique (R1) dans le réservoir tampon (R2), le circuit d'injection (CI) comprenant au moins un module de compression isochore (1A'-1B').

12. Ensemble d'au moins un réservoir cryogénique (R1), d'un turbomoteur d'aéronef (T) et d'un système de conditionnement (SC) selon l'une des revendications précédentes reliant fluidiquement le réservoir cryogénique (R1) et le turbomoteur d'aéronef (T).

13. Procédé de conditionnement en carburant (SC) d'un turbomoteur d'aéronef (T) à partir de carburant (Q) issu d'un réservoir cryogénique (R1) au moyen d'un système de conditionnement (SC) selon l'une des revendications 1 à 11, procédé dans lequel :
• les modules de compression (1A-1D) réalisent une compression isochore du flux de carburant (Q) issu du réservoir cryogénique (R1) pour alimenter le réservoir tampon (R2), et
• le réservoir tampon (R2) alimente le turbomoteur (T) avec un flux de carburant (Q).

14. Procédé de conditionnement (SC) selon la revendication 13, dans lequel au moins deux modules de compression (1A-1D) sont commandés de manière déphasée.

15. Procédé de conditionnement en carburant (SC) selon l'une des revendications 13 à 14, le procédé comportant des étapes de remplissage, de compression isochore, de détente et de dégazage pour chaque module de compression (1A-1D).

## Patentansprüche

1. Kraftstoffkonditionierungssystem (SC), das ausgelegt ist, um ein Flugzeugturbotriebwerk (T) mit Kraftstoff (Q) aus einem Kryotank (R1) zu versorgen, wobei das Konditionierungssystem (SC) einen Kraftstoffkreis (CQ) umfasst, der am Eingang mit dem Kryotank (R1) und am Ausgang mit dem Turbotriebwerk (T) verbunden ist, wobei ein Kraftstoffstrom (Q) in dem Kraftstoffkreis (CQ) von stromaufwärts nach stromabwärts zirkuliert, wobei das System **dadurch gekennzeichnet ist, dass** der Kraftstoffkreis (CQ) einen Puffertank (R2) zur Versorgung des Turbinentriebwerks (T) und eine Vielzahl von Kompressionsmodulen (1A-1D) umfasst, die zur Versorgung des Puffertanks (R2) ausgelegt sind, wobei jedes Kompressionsmodul (1A-1D) umfasst:
• einen elementaren Tank (3A-3D) mit festem Volumen,
• eine elementare Wärmequelle (2A-2D), die ausgelegt ist, um die Temperatur des Kraftstoffs in dem elementaren Tank (3A-3D) isochor zu erhöhen,
• ein Einlassventil (V1A-V1D), das den elementaren Tank (3A-3D) mit einem stromaufwärts gelegenen Teil des Kraftstoffkreises (CQ) verbindet,
• ein Auslassventil (V3A-V3D), das den elementaren Tank (3A-3D) mit dem Puffertank (R2) verbindet, und
• ein Entgasungsventil (V2A-V2D), das den elementaren Tank (3A-3D) mit dem Kryotank (R1) über einen Rückführungskreis (CR) verbindet, in dem ein Gasstrom (G) zirkuliert.

2. Konditionierungssystem (SC) nach Anspruch 1, wobei die Kompressionsmodule (1A-1D) parallel angebracht sind.

3. Konditionierungssystem (SC) nach einem der Ansprüche 1 bis 2, wobei jede elementare Wärmequelle (2A-2D) Kalorien aus dem Turbotriebwerk (T) und/oder dem Flugzeug bereitstellt.

4. Konditionierungssystem (SC) nach einem der Ansprüche 1 bis 3, wobei mindestens ein Kompressionsmodul (1A-1D) mindestens zwei in Reihe angebrachte elementare Tanks (3A-3D, 3A'-3D') umfasst.

5. Konditionierungssystem (SC) nach einem der Ansprüche 1 bis 4, wobei mindestens ein Kompressionsmodul (1A-1D) ein Zufuhrventil (V7A-V7D) umfasst, das ausgelegt ist, um den Druck in dem elementaren Tank (3A-3D) durch In-Kommunikation-Versetzen des elementaren Tanks (3A-3D) mit dem Puffertankt (R2) zu erhöhen.

6. Konditionierungssystem (SC) nach einem der Ansprüche 1 bis 5, umfassend mindestens einen ersten Wärmetauscher (21), der ausgelegt ist, um dem im Rückführungskreis (CR) zirkulierenden Gasstrom (G) Kalorien zu entnehmen und diese an den Kraftstoffstrom (Q) zu übertragen.

7. Konditionierungssystem (SC) nach einem der Ansprüche 1 bis 6, umfassend mindestens einen zweiten Wärmetauscher (22) stromaufwärts der Kompressionsmodule (1A-1D), der ausgelegt ist, um einer Wärmequelle (52) Kalorien zu entnehmen und diese an den Kraftstoffstrom (Q) zu übertragen.

8. Konditionierungssystem (SC) nach einem der Ansprüche 1 bis 7, umfassend mindestens einen dritten Wärmetauscher (23) stromabwärts der Kompressionsmodule (1A-1D), der ausgelegt ist, um einer Wärmequelle (53) Kalorien zu entnehmen und diese an den Kraftstoffstrom (Q) vor dessen Einspritzung in das Turbotriebwerk (T) zu übertragen.

9. Klimatisierungssystem (SC) nach einem der Ansprüche 1 bis 8, umfassend mindestens eine mechanischen Zusatzpumpe (20), die stromaufwärts der Kompressionsmodule (1A-1D) angebracht ist.

10. Konditionierungssystem (SC) nach einem der Ansprüche 1 bis 9, umfassend einen Entlastungskreis (CD) für einen Gasstrom (G) aus dem Kryotank (R1) und ein Entlastungsorgan (12), das stromaufwärts der Kompressionsmodule (1A-1D) positioniert und ausgelegt ist, um den Kraftstoffstrom (Q) mit Gasstrom (G) anzureichern.

11. Konditionierungssystem (SC) nach einem der Ansprüche 1 bis 10, umfassend einem Injektionskreis (CI) für einen Gasstrom (G) aus dem Kryotank (R1) in den Puffertank (R2), wobei der Injektionskreis (CI) mindestens ein isochores Kompressionsmodul (1A'-1B') umfasst.

12. Anordnung aus mindestens einem Kryotank (R1), einem Flugzeugturbotriebwerk (T) und einem Konditionierungssystem (SC) nach einem der vorhergehenden Ansprüche, die den Kryotank (R1) und das Flugzeugturbotriebwerk (T) fluidisch miteinander verbindet.

13. Konditionierungsverfahren (SC) mit Kraftstoff eines Flugzeugtriebwerks (T) mittels Kraftstoffs (Q) aus einem Kryotank (R1) mit Hilfe eines Konditionierungssystems (SC) nach einem der Ansprüche 1 bis 11, wobei bei dem Verfahren:
• die Kompressionsmodule (1A-1D) eine isochore Kompression des Kraftstoffstroms (Q) aus dem Kryotank (R1) durchführen, um den Puffertank (R2) zu versorgen, und
• der Puffertank (R2) das Turbotriebwerk (T) mit einem Kraftstoffstrom (Q) versorgt.

14. Konditionierungsverfahren (SC) nach Anspruch 13, wobei mindestens zwei Kompressionsmodule (1A-1D) phasenverschoben gesteuert werden.

15. Konditionierungsverfahren (SC) mit Kraftstoff nach einem der Ansprüche 13 bis 14, wobei das Verfahren für jedes Kompressionsmodul (1A-1D) die Schritte Füllen, isochore Kompression, Entspannung und Entgasung umfasst.

## Claims

1. Fuel conditioning system (SC) configured to supply an aircraft turbine engine (T) from fuel (Q) stemming from a cryogenic tank (R1), the conditioning system (SC) comprising a fuel circuit (CQ) connected at the inlet to the cryogenic tank (R1) and at the outlet to the turbine engine (T), a fuel flow (Q) circulating from upstream to downstream in the fuel circuit (CQ), system **characterized by** the fact that the fuel circuit (CQ) comprises a buffer tank (R2) to supply the turbine engine (T) and a plurality of compression modules (1A-1D) configured to supply the buffer tank (R2), each compression module (1A-1D) comprising:
- an elementary tank (3A-3D) of fixed volume,
- an elementary heat source (2A-2D) configured to increase the temperature of the fuel in the elementary tank (3A-3D) in an isochoric manner,
- an inlet valve (V1A-V1D) connecting the elementary tank (3A-3D) to an upstream part of the fuel circuit (CQ),
- an outlet valve (V3A-V3D) connecting the elementary tank (3A-3D) to the buffer tank (R2) and
- a degassing valve (V2A-V2D) connecting the elementary tank (3A-3D) to the cryogenic tank (R1) by a return circuit (CR) in which circulates a gaseous flow (G).

2. Conditioning system (SC) according to claim 1, wherein the compression modules (1A-1D) are mounted in parallel.

3. Conditioning system (SC) according to one of claims 1 to 2, wherein each elementary heat source (2A-2D) provides calories stemming from the turbine engine (T) and/or the aircraft.

4. Conditioning system (SC) according to one of claims 1 to 3, wherein at least one compression module (1A-1D) comprises at least two elementary tanks (3A-3D, 3A'-3D') mounted in series.

5. Conditioning system (SC) according to one of claims 1 to 4, wherein at least one compression module (1A-1D) comprises a delivery valve (V7A-V7D) configured to increase the pressure in the elementary tank (3A-3D) by communicating the elementary tank (3A-3D) with the buffer tank (R2).

6. Conditioning system (SC) according to one of claims 1 to 5, comprising at least one first exchanger (21) configured to take calories from the gaseous flow (G) circulating in the return circuit (CR) and to transmit them to the fuel flow (Q).

7. Conditioning system (SC) according to one of claims 1 to 6, comprising at least one second exchanger (22), upstream of the compression modules (1A-1D), configured to take calories from a heat source (52) and to transmit them to the fuel flow (Q).

8. Conditioning system (SC) according to one of claims 1 to 7, comprising at least one third exchanger (23), downstream of the compression modules (1A-1D), configured to take calories from a heat source (53) and to transmit them to the fuel flow (Q) prior to its injection into the turbine engine (T).

9. Conditioning system (SC) according to one of claims 1 to 8, comprising at least one make-up mechanical pump (20) mounted upstream of the compression modules (1A-1D).

10. Conditioning system (SC) according to one of claims 1 to 9, comprising a discharge circuit (CD) of a gaseous flow (G) stemming from the cryogenic tank (R1) and a discharge member (12), positioned upstream of the compression modules (1A-1D), configured to enrich the fuel flow (Q) with the gaseous flow (G).

11. Conditioning system (SC) according to one of claims 1 to 10, comprising an injection circuit (CI) of a gaseous flow (G) stemming from the cryogenic tank (R1) into the buffer tank (R2), the injection circuit (CI) comprising at least one isochoric compression module (1A'-1B').

12. Assembly of at least one cryogenic tank (R1), an aircraft turbine engine (T) and a conditioning system (SC) according to one of the preceding claims fluidically connecting the cryogenic tank (RC) and the aircraft turbine engine (T).

13. Method for conditioning fuel (SC) of an aircraft turbine engine (T) from fuel (Q) stemming from a cryogenic tank (R1) by means of a conditioning system (SC) according to one of claims 1 to 11, method wherein:
- the compression modules (1A-1D) perform an isochoric compression of the fuel flow (Q) stemming from the cryogenic tank (R1) to supply the buffer tank (R2), and
- the buffer tank (R2) supplies the turbine engine (T) with a fuel flow (Q).

14. Conditioning method (SC) according to claim 13, wherein at least two compression modules (1A-1D) are controlled in a phase-shifted manner.

15. Fuel conditioning method (SC) according to one of claims 13 to 14, the method comprising steps of filling, isochoric compression, expansion and degassing for each compression module (1A-1D).
